# DEMANDE DE BREVET EUROPEEN

(11) **EP 4 393 684 A1**
(43) Date de publication de la demande: **03.07.2024**
(21) Numéro de dépôt: 23220830.6
(22) Date de dépôt: 29.12.2023
(51) Int. Cl.: B29C 65/04, B29C 65/00, H05B 6/50, H05B 6/62, B29L 23/00, B29L 31/00

(54) **DISPOSITIF POUR SOUDER UN TUBE MÉDICAL SOUPLE**

(30) Priorité: 30.12.2022 FR 2214683
(71) Demandeur: Maco Pharma, 59420 Mouvaux (FR)
(72) Inventeur: UNAL, Hervé, 82230 La Salvetat-Belmontet (FR)
(74) Mandataire: Sayettat, Julien Christian

(57) **Abrégé**

L'invention concerne un dispositif (1) pour souder un tube souple par radiofréquence comprenant :
- un organe de pincement (2) comprenant une tête de soudage formée d'une première électrode (3) et d'une deuxième électrode (4),
- une source d'énergie configurée pour alimenter en énergie électrique le dispositif à souder, et
- un organe de soudure comprenant un générateur de radiofréquence et un convertisseur d'énergie radiofréquence, lesdites première et deuxième électrodes (3,4), ladite source d'énergie, ledit générateur de radiofréquence et ledit convertisseur d'énergie formant entre eux un circuit électrique ayant une impédance, ledit convertisseur d'énergie comprenant au moins deux inducteurs montés en série avec la première et deuxième électrode (3,4) de l'organe de soudure et un élément de contrôle du passage de courant électrique configuré pour couper le passage dudit courant électrique dans l'un des inducteurs de sorte à maintenir constante l'impédance du circuit électrique pendant la soudure.

## Description

La présente invention concerne un dispositif pour souder un tube souple par radiofréquence ainsi qu'un appareil comprenant un tel dispositif.

Elle s'applique au domaine médical et biomédical, en particulier au domaine du traitement du sang ou des cellules biologiques et au domaine de la perfusion.

Pour la collecte du sang d'un donneur et son traitement ultérieur, on utilise de façon connue des systèmes à poches comprenant une ou plusieurs poches reliées entre elles par l'intermédiaire de tubes souples de sorte à former un système clos. Ces poches et tubes sont notamment réalisés dans un matériau thermoplastique souple tel que le polychlorure de vinyle plastifié ou l'éthylène-acétate de vinyle. Pour isoler les différents éléments de tels systèmes à poches, il est également connu de sceller ces tubes à l'aide d'un appareil à souder. Ces appareils à souder sont soit portables, pouvant être tenus dans la main d'un utilisateur, soit fixes, posés sur un plan de travail. Dans le cas d'appareils à souder portables, on distingue les appareils à souder sans fil dont la batterie est intégrée à l'appareil et les appareils à souder reliés par un fil à une batterie extérieure.

Le principe de ces appareils à souder repose sur l'application d'une chaleur sur le tube pour commencer à le faire fondre tout en appliquant une pression sur le tube afin de souder ensemble les parois du tube. Dans le cas d'une soudeuse par radiofréquence (RF), le tube plastique est placé entre deux électrodes et un signal haute fréquence (HF) est généré entre ces deux électrodes, provoquant une perte diélectrique et une élévation de la température du tube. La soudure est réalisée par rapprochement des électrodes jusqu'à pincer le tube.

Cependant, la distance entre les électrodes change pendant le soudage, entraînant un changement d'impédance. Ce changement d'impédance affecte négativement la qualité de la soudure en désaccordant la fréquence de résonance et réduit fortement le rendement énergétique de la soudeuse.

Or, pour les appareils à souder portables sans fil notamment, le rendement énergétique doit être maximal pour que de tels appareils atteignent une autonomie en nombre de soudures supérieure à cinq cents soudures tout en possédant un poids minimal.

Afin de réduire la consommation d'énergie de telles soudeuses, le document US 5,750,971 décrit une soudeuse portable ou fixe dans laquelle le générateur RF génère une énergie RF à tension constante et puissance variable dans le temps en fonction du changement d'impédance.

Pour réduire les effets d'un désaccord d'impédance, le document WO 2016/079702 propose une soudeuse portable comprenant essentiellement une tête de soudage munie d'une pince avec des électrodes, un générateur radiofréquence (RF) comprenant un oscillateur et un premier et deuxième étage d'amplification, une unité d'alimentation électrique, une carte de pilotage, et un inducteur haute tension. L'inducteur haute tension est configuré pour transformer le signal généré à la sortie du générateur RF en un signal RF haute tension et pour effectuer un réglage précis de l'adaptation de l'impédance.

Le document WO 2016/083459 décrit une soudeuse portable sans fil comprenant une pince constituée d'une paire de mâchoires munies de deux électrodes, un circuit d'alimentation électrique haute fréquence comprenant un générateur haute fréquence (HF) avec un circuit HF à impédance variable et un dispositif de contrôle d'impédance. Dans le circuit à impédance variable, la capacité du condensateur et/ou l'inductance de la bobine associée et/ou la résistance ohmique du circuit résonant HF sont réglables. Le dispositif de contrôle d'impédance est configuré pour maintenir constante l'impédance du circuit d'alimentation électrique HF durant le soudage. En particulier, le réglage de l'impédance est couplé au mouvement des mâchoires de la soudeuse.

Le document EP4 009 744 A1 décrit une soudeuse fixe pour souder un tube médical souple par radiofréquence. La soudeuse comprend une paire d'électrodes connectées à un circuit de commande. Le circuit de commande comprend un générateur RF ainsi qu'un inducteur monté en série avec un condensateur réglable. Le condensateur réglable est lui-même monté en parallèle avec le condensateur formé par les électrodes. Pour adapter la capacité du condensateur réglable à l'inductance de l'inducteur, une source de polarisation applique une tension de polarisation au condensateur réglable afin d'ajuster sa capacité.

Le dispositif pour souder un tube souple selon l'invention permet de maximiser son rendement énergétique, de sorte à pouvoir être portatif et atteindre une autonomie de plus de cinq cents soudures.

En effet, le dispositif de l'invention pour souder un tube souple par radiofréquence comprend :
- un organe de pincement comprenant une tête de soudage formée d'une première électrode et d'une deuxième électrode ,
- une source d'énergie configurée pour alimenter en énergie électrique le dispositif pour souder, et
- un organe de soudure comprenant un générateur de radiofréquence et un convertisseur d'énergie radiofréquence, lesdites première et deuxième d'électrodes, ladite source d'énergie, ledit générateur de fréquence et ledit convertisseur d'énergie formant entre eux un circuit électrique ayant une impédance, ledit convertisseur d'énergie comprenant au moins deux inducteurs montés en série avec la première et la deuxième électrode de l'organe de soudure et un élément de contrôle du passage de courant électrique configuré pour couper ou établir le passage de courant électrique dans l'un des inducteurs de sorte à maintenir constante l'impédance du circuit électrique pendant la soudure.

Selon un autre aspect, l'invention concerne un appareil comprenant un tel dispositif pour souder un tube souple.

Les dessins annexés illustrent l'invention :
[Fig.1] représente un schéma de principe du dispositif pour souder un tube souple de l'invention.
[Fig.2] représente une vue de côté du dispositif pour souder un tube souple de l'invention.
[Fig.3] représente une vue en coupe de l'organe de pincement du dispositif pour souder de l'invention.
[Fig.4] représente une vue en perspective d'une batterie amovible du dispositif pour souder de l'invention.
[Fig.5] représente une vue en perspective d'une batterie amovible du dispositif pour souder de l'invention, placée dans un dispositif de charge.
[Fig.6] représente un schéma de principe d'une partie du circuit électrique du dispositif pour souder de l'invention.
[Fig.7] représente une vue en éclaté des différents composants du dispositif pour souder de l'invention.
[Fig.8] représente une vue de côté d'une variante d'un élément de réception du tube du dispositif pour souder de l'invention.

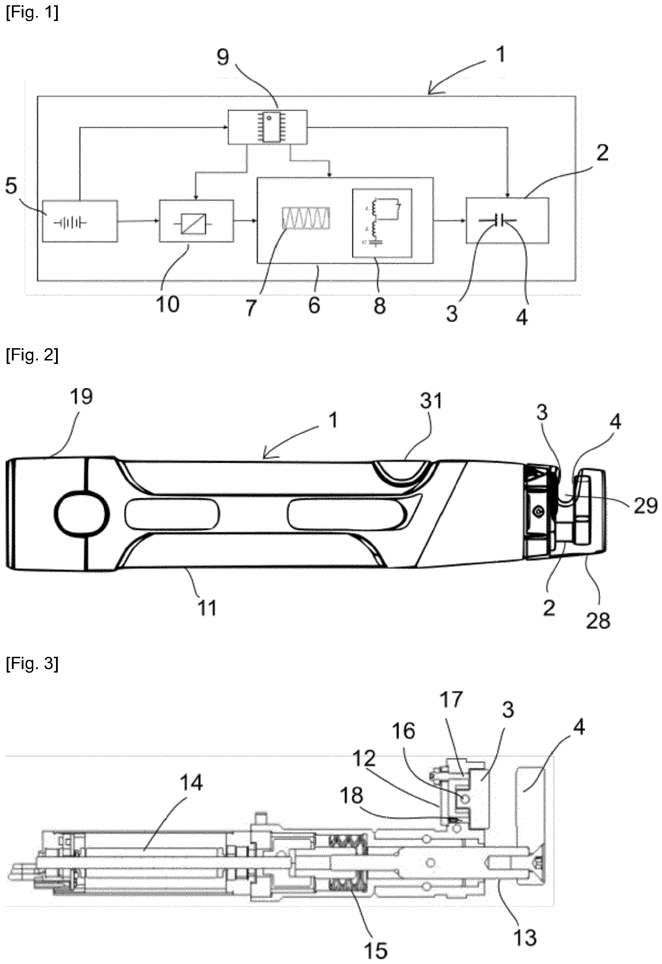

En référence au schéma de principe de la figure 1, le dispositif 1 pour souder un tube souple par radiofréquence comprend :
- un organe de pincement 2 comprenant une tête de soudage formée d'une première électrode 3 et d'une deuxième électrode 4,
- une source d'énergie 5 configurée pour alimenter en énergie électrique le dispositif pour souder 1,
- un organe de soudure 6 comprenant un générateur de radiofréquence 7 et un convertisseur d'énergie radiofréquence 8,
- un adaptateur d'énergie 10 configuré pour adapter l'énergie produite par la source d'énergie 5 au générateur de radiofréquence 7, et
- une unité de pilotage 9 configurée pour piloter au moins l'organe de pincement, la source d'énergie et l'organe de soudure.

Le tube souple est un tube réalisé en matériau thermoplastique tel que le polychlorure de vinyle plastifié ou l'éthylène-acétate de vinyle. Ce type de tube souple à souder est généralement utilisé dans le domaine médical ou biomédical.

Plus particulièrement et selon la figure 2, le dispositif 1 pour souder comprend un corps 11 substantiellement cylindrique configuré pour être tenu dans une main d'un utilisateur. Selon cette réalisation, le dispositif pour souder est un appareil pour souder un tube souple.

En variante non représentée, le dispositif pour souder est agencé dans un appareil plus complexe utilisé en combinaison avec un dispositif médical comprenant un tube souple. De tels appareils sont par exemple un appareil de collecte du sang comme celui décrit dans le document WO2020208023A1 ou un appareil pour séparer et extraire les composants du sang tel que celui décrit dans le document WO2014006339A1.

L'organe de pincement 2 dans lequel un tube souple (non représenté) est inséré pour être soudé est agencé dans la partie avant du corps 11. L'organe de pincement 2 comprend une tête de soudage formée d'une première électrode 3 et d'une deuxième électrode 4.

En référence à la figure 3, l'organe de pincement 2 du dispositif 1 pour souder comprend une tête de soudage ayant un élément d'appui 12 avec la première électrode 3 et un élément de pincement 13 avec la deuxième électrode 4, mobile par rapport à l'élément d'appui 12.

L'élément de pincement 13 est mobile entre une position d'ouverture selon laquelle un tube souple placé entre les deux électrodes 3,4 est non déformé, une position de pincement selon laquelle un tube souple placé entre les deux électrodes 3,4 est obturé et une position de soudure selon laquelle un tube souple placé entre les deux électrodes 3,4 est comprimé. Entre la position d'obturation et la position de soudure, une pression supplémentaire est appliquée sur le tube souple.

La première et deuxième électrode 3,4 sont réalisées dans un matériau conducteur d'électricité pouvant générer un champ électrique radiofréquence. Ces électrodes et le champ électrique agissent comme un condensateur.

L'organe de pincement 2 comprend en outre un moyen d'entraînement 14 agencé pour produire un mouvement et le transmettre audit élément de pincement 13. Dans une réalisation particulière, le moyen d'entraînement 14 est configuré pour déplacer linéairement l'élément de pincement 13.

Par exemple, le moyen d'entraînement 14 est un moteur électrique couplé à une vis sans fin. Alternativement, le moyen d'entraînement est un moteur linéaire pas-à-pas, un moteur à courant continu ou alternatif, un moteur sans balai, ou un vérin pneumatique ou hydraulique.

Afin de réduire l'encombrement de l'organe de pincement 2, le moyen d'entraînement 14 est couplé à un élément élastique 15 tel qu'un ressort de compression. Dans une première phase et par l'intermédiaire de la vis sans fin, le moyen d'entraînement 14 déplace la deuxième électrode 4 de l'élément de pincement 13 en direction de la première électrode 3 de l'élément d'appui 12 jusqu'à la position de pincement dans laquelle le tube à souder est obturé. A la fin de cette phase, le ressort de compression est mis sous contrainte du fait de la présence du tube à souder. Dans une deuxième phase correspondant à l'envoi d'un signal radiofréquence, le ressort se détend du fait du ramollissement du tube, entraînant le rapprochement de la première électrode 3 et de la deuxième électrode 4 d'appui jusqu'à la position de soudure dans laquelle le tube souple est comprimé pour réaliser la soudure.

Pour que la soudure soit de bonne qualité, la première électrode 3 et la deuxième électrode 4 comprennent chacune une surface substantiellement plane et parallèle l'une par rapport à l'autre.

Selon la réalisation de la figure 3, afin de pouvoir régler le parallélisme de ces électrodes, la première électrode 3 est mobile en rotation par rapport à une tige 16 de l'organe de pincement 2. Cette tige 16 formant axe de rotation est placée parallèlement à l'axe du tube souple à souder lorsqu'il est disposé entre la première et la deuxième électrodes 3,4. Une première vis 17 et une deuxième vis 18 sont agencées transversalement à ladite tige 16, en contact avec la partie arrière haute et la partie arrière basse la première électrode 3, respectivement. En serrant ou desserrant l'une ou l'autre des vis 17,18, la première électrode 3 est mise parallèle à la deuxième électrode 4.

Le dispositif pour souder 1 comprend en outre une source d'énergie 5 configurée pour l'alimenter en énergie électrique. Notamment, la source d'énergie 5 alimente en courant électrique le générateur de radiofréquence 7 par l'intermédiaire de l'adaptateur d'énergie 10.

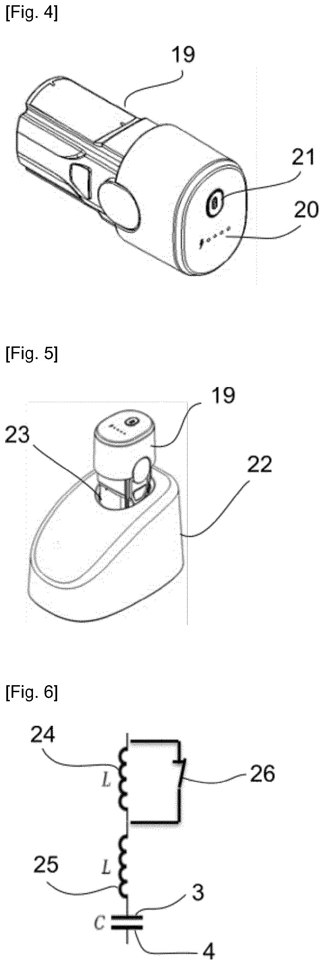

Comme représentée sur la figure 4, cette source d'énergie est en particulier une batterie 19. Avantageusement, la batterie 19 est intégrée de façon amovible dans le dispositif pour souder, c'est-à-dire qu'elle est configurée pour être placée de façon réversible dans le corps 11 du dispositif pour souder 1. Grâce à cette batterie intégrée, l'appareil pour souder ne comprend pas de fil le reliant à un élément extérieur ce qui facilite sa manipulation.

En particulier, la batterie 19 est encliquetable dans le corps 11 du dispositif pour souder, sur la partie arrière, c'est-à-dire la partie opposée à la tête de soudure comprenant les deux électrodes 3,4.

Selon une réalisation particulière, la batterie 19 comprend un indicateur lumineux 20 de charge sous forme d'une série de diodes électroluminescentes et un bouton de charge 21 sur lequel l'utilisateur appuie pour allumer la série de diodes et vérifier le niveau de charge de la batterie.

La batterie est par exemple une batterie de type lithium, lithium-ion, titanate de lithium, nickel, nickel-cadmium, nickel-manganèse-cobalt, nickel-fer, nickel-hydrure métallique ou lithium fer phosphate. Avantageusement, la batterie possède une densité énergétique supérieure à 90 Wh/kg, notamment supérieure à 150 Wh/Kg. Cette densité énergétique permet d'obtenir une autonomie suffisante pour réaliser plus de 500 soudures par charge dans un encombrement relativement faible. En outre, la batterie possède un courant de décharge supérieure à 10 A, notamment supérieure à 20 A. Ce courant est suffisant pour alimenter le générateur radiofréquence de l'organe de soudure.

La figure 5 représente un dispositif de charge 22 dans lequel est disposée une batterie amovible 19. Ce dispositif de charge 22 comprend un moyen de réception 23 de la batterie 19. Ce moyen de réception 23 est par exemple une partie creuse dans le corps du dispositif de charge. En variante non représentée, le dispositif de charge comprend au moins deux moyens de réception de batterie afin de pouvoir recharger plusieurs batteries en même temps.

Selon une réalisation particulière, le dispositif 1 pour souder comprend un adaptateur d'énergie 10 configuré pour adapter l'énergie produite par la source d'énergie 5 au générateur de radiofréquence 7. Notamment, l'adaptateur d'énergie 10 est un convertisseur de tension qui transforme la tension du courant générée par la batterie 19 en tension utilisable par le générateur de radiofréquence 7. Par exemple, le convertisseur de tension permet de délivrer une tension d'environ 50 V au générateur de radiofréquence à partir de la tension de 5 V délivrée par la batterie 19. Le convertisseur de tension maintient la puissance électrique de la batterie 19.

Le dispositif pour souder 1 comprend en outre un organe de soudure 6 configuré pour souder le tube souple par radiofréquence. L'organe de soudure comprend le générateur de radiofréquence 7 et un convertisseur d'énergie radiofréquence 8.

Le condensateur formé par la première et la deuxième électrodes 3,4, la source d'énergie 5, le générateur de fréquence 7 et le convertisseur d'énergie 8 forment entre eux un circuit électrique. Ce circuit électrique peut comprendre d'autres composants du dispositif pour souder, notamment l'adaptateur d'énergie 10.

Ce circuit électrique possède une fréquence de résonance à laquelle la consommation d'énergie est moindre. A cette fréquence de résonance, le transfert énergétique est optimal. Au cours de l'opération de soudure, l'impédance du circuit électrique varie en fonction notamment de la distance entre la première et la deuxième électrode 3,4.

Le générateur RF comprend un oscillateur configuré pour générer un signal haute fréquence, notamment un signal ayant une fréquence de 40,68 MHz. Par exemple, l'oscillateur est un oscillateur à base de résonateurs en quartz ou de type système micro-électromécanique (MEMS, Micro Electro-Mechanical System).

Le générateur RF comprend en outre un ou plus amplificateurs conçus pour que le générateur RF délivre une puissance de sortie supérieure à 80 W, en particulier d'environ 100 watts.

L'organe de soudure 6 comprend en outre un convertisseur d'énergie radiofréquence 8 conçu pour transformer le signal RF à la sortie du générateur RF en un signal calorifique.

Avantageusement, le convertisseur d'énergie 8 comprend un filtre réjecteur de fréquence pour ne conserver sensiblement que la fréquence de résonance afin d'absorber son énergie. Par exemple, le filtre réjecteur comprend un inducteur et un condensateur montés en parallèle du générateur RF et d'une résistance.

Comme illustré sur la figure 6 et selon l'invention, le convertisseur d'énergie radiofréquence 8 comprend en outre au moins deux inducteurs 24,25 montés en série et un élément de contrôle du passage de courant électrique 26 configuré pour couper le passage dudit courant électrique dans l'un des inducteurs de sorte à maintenir constante l'impédance du circuit électrique pendant la soudure. L'élément de contrôle du passage de courant électrique 26 est en outre configuré pour rétablir le courant électrique dans l'inducteur mis hors-circuit avant le début de la soudure suivante.

Par exemple, les inducteurs 24,25 sont réalisés sous forme d'une ou plusieurs bobines à inductance constante, c'est-à-dire non variable. En particulier, le convertisseur d'énergie 8 comprend trois bobines montées en série dont l'une au moins peut être mise hors circuit par l'élément de contrôle du passage du courant électrique 26.

L'une ou plus des bobines comprend avantageusement un élément d'amplification de l'inductance tel qu'une ferrite placée de façon fixe dans la bobine. Cette réalisation contribue à la miniaturisation de l'organe de soudure en autorisant l'utilisation de bobines de petite taille.

L'élément de contrôle du passage du courant électrique 26 est par exemple un relais électrique ou un interrupteur électromécanique configuré pour ouvrir et fermer les contacteurs d'un circuit électrique.

Selon une configuration, ces inducteurs 24,25 sont montés en série avec le condensateur formé par la première et la deuxième électrode 3,4 de l'organe de pincement 2.

Lors de la soudure, la distance entre la première électrode 3 et la deuxième électrode 4 et la présence du tube modifie l'impédance du circuit électrique, ce qui engendre une perte en rendement énergétique du fait que la fréquence de résonance s'éloigne de la fréquence du circuit. Ce phénomène est appelé désaccord de fréquence de résonance. En court-circuitant l'un des inducteurs 24,25 au moment du désaccord de fréquence de résonance, l'impédance du circuit électrique est maintenue sensiblement constante, fournissant ainsi un bon rendement énergétique.

Le maintien de l'impédance est réalisé sans changer la fréquence du signal RF.

Le désaccord de fréquence de résonance est détecté indirectement en déterminant de façon continue le courant consommé par le générateur RF et/ou les champs radiofréquences émis autour des inducteurs et/ou directement en déterminant le signal HF.

La sélectivité liée à un tel circuit électrique résonant comprenant les inducteurs 24,25 et le condensateur formé par les électrodes 3,4 montés en série est avantageuse par rapport à un montage en parallèle, car elle permet d'augmenter la perte de charges diélectriques. Cette sélectivité est par ailleurs accrue par l'utilisation de ferrite dans les bobines comme décrit ci-dessus, permettant de réduire la résistance série.

Le dispositif pour souder comprend en outre une unité de pilotage 9 configurée pour piloter au moins l'organe de pincement 2, la source d'énergie 5 et l'organe de soudure 6.

En particulier, l'unité de pilotage 9 est configurée pour, lors d'un désaccord de fréquence de résonance pendant la soudure, activer l'élément de contrôle du passage du courant électrique 26 afin de mettre hors-circuit l'un des inducteurs 24,25.

Cette mise hors-circuit de l'un des inducteurs 24,25 permet de maintenir constante l'impédance du circuit constitué par le condensateur formé par la paire d'électrodes 3,4 et les inducteurs 24,25.

Comme vu ci-dessus, le désaccord de fréquence de résonance est détecté indirectement en déterminant de façon continue le courant consommé par le générateur RF et/ou les champs radiofréquences émis autour des inducteurs et/ou directement en déterminant le signal HF.

Sur la base de ces informations de suivi, l'unité de pilotage détecte en outre la fin de la soudure et si celle-ci s'est correctement déroulée. L'unité de pilotage 9 émet un signal informant que le procédé de soudure ne s'est pas déroulé correctement, le cas échéant.

En particulier, l'unité de pilotage 9 est configurée pour commander le moyen d'entrainement 14 de l'organe de pincement 2 et le déclenchement du générateur radiofréquence 7.

L'unité de pilotage 9 est en outre configurée pour détecter la présence, l'absence et/ou l'épaisseur d'un tube à souder entre les électrodes. Par exemple, l'unité de pilotage est configurée pour analyser le courant consommé par l'organe d'entraînement durant la première phase de soudure. L'unité de pilotage est alors configurée pour émettre un signal en cas d'absence de tube souple.

L'unité de pilotage 9 se présente sous la forme d'un système électronique et informatique qui comprend par exemple un microprocesseur conçu pour exécuter un programme de commandes. L'exécution de ce programme permet à l'unité de pilotage 9 de commander le dispositif pour souder 1 en fonction par exemple de l'impédance du circuit électrique formé par les électrodes 3,4, la source d'énergie 5, le générateur de radiofréquence 7 et le convertisseur d'énergie 8.

L'unité de pilotage analyse en outre Les informations de suivi pour détecter la fin du procédé de soudure et si celui-ci s'est correctement déroulé. L'unité de pilotage 9 envoie un signal informant que le procédé de soudure ne s'est pas déroulé correctement, le cas échéant.

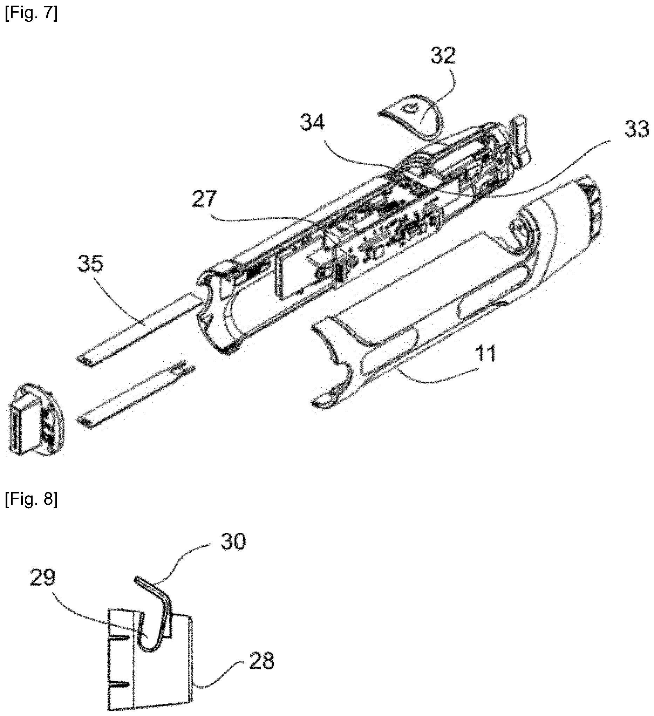

Comme représenté sur la figure 7, l'organe de soudure 6 et l'unité de pilotage 9 sont réalisés sous forme d'un ensemble de cartes 27 de circuit imprimé disposées autour de l'organe de pincement 2. Cette disposition forme une cage de Faraday qui bloque au moins en partie les champs électromagnétiques susceptibles d'influer de façon négative sur le fonctionnement du dispositif pour souder 1 ou le fonctionnement des autres appareils à proximité du dispositif pour souder 1.

Selon la figure 2, le corps 11 de l'appareil à souder comprend en outre un élément de réception de tube 28 configuré pour recevoir le tube à souder. Selon la figure 2, l'élément de réception du tube 28 recouvre la tête de soudage de l'organe de pincement 2. L'élément de réception du tube 28 est en outre pourvu d'une fente 29 conçue pour loger le tube à souder et le positionner correctement dans la tête de soudage entre les deux électrodes 3,4. Avantageusement, l'élément de réception du tube 28 est transparent, permettant à l'utilisateur de vérifier le bon positionnement du tube à souder dans la tête de soudage. En particulier, l'élément de réception du tube 28 est amovible pour pouvoir être nettoyé et remplacé par un autre élément de réception de tube.

La figure 8 représente ainsi un élément de réception du tube 28 selon une variante de réalisation. Dans cette réalisation, un bord de la fente 29 dans laquelle vient se loger le tube est prolongé vers l'extérieur par une languette courbe 26 s'étendant au-dessus de l'ouverture de la fente 29. Cette languette 30 protège l'utilisateur des éclaboussures de liquide contenu dans le tube à souder qui peuvent rejaillir en cas de fuite dans ledit tube.

En référence à la figure 2, un actionneur 31 sous forme d'un ensemble bouton est prévu pour actionner le dispositif pour souder 1. Cet actionneur est configuré pour déclencher l'opération de soudage comme décrit ci-après.

Sur la figure 7, l'actionneur comprend une pièce de bouton 32 incorporée dans le corps 11 de l'appareil à souder, sur laquelle l'utilisateur appuie pour enclencher le dispositif pour souder. L'actionneur comprend en outre deux boutons poussoirs 33,34 actionnables par l'intermédiaire d'une lame 35 agencée entre les boutons poussoirs et la pièce de bouton 32. La lame 35 est conçue pour appuyer sur l'un et/ou l'autre des boutons poussoirs 33,34 lorsqu'on exerce une pression sur la pièce de bouton 32 de l'actionneur 31. Cette lame permet également de permettre à la pièce de bouton 32 de reprendre sa position initiale lorsque la pièce de bouton 32 n'est plus pressée. La lame est par exemple en polymère époxyde.

La pièce de bouton 32 est notamment suffisamment grande pour que l'actionneur puisse être enclenché facilement par l'utilisateur quelle que soit la position de l'appareil à souder. Les deux boutons poussoirs 33,34 combinés à la lame 35 assurent le déclenchement de l'actionneur 31 quel que soit l'endroit de la pièce de bouton 32 où l'utilisateur appuie.

Selon une réalisation, le dispositif pour souder 1 comprend en outre un indicateur de suivi du soudage. Par exemple, l'indicateur de suivi est un indicateur lumineux comprenant une ou plusieurs diodes électroluminescentes. Chaque étape du soudage - début, progrès, fin - est indiquée par l'allumage d'une diode d'une couleur déterminée. Ces diodes sont notamment disposées au niveau de l'actionneur 31.

On décrit ci-après le fonctionnement du dispositif pour souder de l'invention.

L'unité de pilotage 9 est configurée pour mettre en oeuvre un procédé pour souder un tube souple à l'aide du dispositif pour souder de l'invention comprenant les étapes suivantes :
- activer l'organe de pincement 2 de sorte que les électrodes 3,4 pincent le tube à souder,
- après détection du tube à souder, activer l'organe de soudure 6 de sorte à déclencher le générateur radiofréquence 7 et générer un signal haute fréquence entre les deux électrodes 3,4,
- après détection d'un désaccord de fréquence de résonance, activer l'élément de contrôle du passage de courant électrique 26 du convertisseur d'énergie 8 de sorte à maintenir l'impédance du circuit électrique constante,
- après détection d'un autre désaccord de fréquence de résonance, indicateur de la fin de la soudure, arrêter le générateur radiofréquence 7, et
- activer l'organe de pincement 2 de sorte à libérer le tube soudé de la première et deuxième électrodes 3,4.

La première activation de l'organe de pincement entraîne le déplacement de l'élément de pincement 13 de la position d'ouverture à la position de pincement. L'organe de pincement est notamment activé par l'intermédiaire de l'actionneur 31.

Le déclenchement de l'organe de soudure 6 entraîne le déplacement de l'élément de pincement 13 de la position de pincement à la position de soudure.

La dernière activation de l'organe de pincement entraîne le déplacement de l'élément de pincement 13 de la position de soudure à la position d'ouverture.

Avantageusement, la libération du tube souple soudé est effectuée après un temps de refroidissement pendant lequel le tube est comprimé entre les deux électrodes et le générateur RF est à l'arrêt. Ce temps de refroidissement permet au tube soudé de baisser en température pour permettre à la soudure de se figer.

Ce temps de refroidissement est fixe ou bien variable en fonction de la température interne du dispositif à souder.

## Revendications

1. Dispositif (1) pour souder un tube souple par radiofréquence comprenant :
- un organe de pincement (2) comprenant une tête de soudage formée d'une première électrode (3) et d'une deuxième électrode (4),
- une source d'énergie (5) configurée pour alimenter en énergie électrique le dispositif pour souder, et
- un organe de soudure (6) comprenant un générateur de radiofréquence (7) et un convertisseur d'énergie radiofréquence (8), lesdites première et deuxième électrodes (3,4), ladite source d'énergie (5), ledit générateur de radiofréquence (7) et ledit convertisseur d'énergie (8) formant entre eux un circuit électrique ayant une impédance, **caractérisé en ce que** ledit convertisseur d'énergie (8) comprend au moins deux inducteurs (24,25) montés en série avec la première et la deuxième électrode (3,4) de l'organe de soudure (6) et un élément de contrôle du passage de courant électrique (26) configuré pour couper le passage dudit courant électrique dans l'un des inducteurs (24,25) de sorte à maintenir constante l'impédance du circuit électrique pendant la soudure.

2. Dispositif pour souder selon la revendication 1
**caractérisé en ce qu'**il comprend en outre un adaptateur d'énergie (10) configuré pour adapter l'énergie produite par la source d'énergie (5) au générateur de radiofréquence (7).

3. Dispositif pour souder selon l'une des revendications 1 ou 2 **caractérisé en ce qu'**il comprend en outre une unité de pilotage (9) configurée pour piloter au moins l'organe de pincement (2), la source d'énergie (5) et l'organe de soudure (6).

4. Dispositif pour souder selon la revendication 3
**caractérisé en ce que** l'unité de pilotage (9) est configurée pour, lors d'un désaccord de fréquence de résonance pendant la soudure, activer l'élément de contrôle du passage de courant électrique (26) afin de mettre hors-circuit l'un des inducteurs (24,25).

5. Dispositif pour souder selon la revendication 3 ou 4
**caractérisé en ce que** l'unité de pilotage (9) est configurée pour émettre un signal en cas d'absence de tube souple.

6. Dispositif pour souder selon l'une quelconque des revendication 1 à 5 **caractérisé en ce que** la tête de soudage comprend un élément d'appui (12) avec la première électrode (3) et un élément de pincement (13) avec la deuxième électrode (4), ledit élément de pincement (13) étant mobile par rapport à l'élément d'appui (12).

7. Dispositif pour souder selon l'une quelconque des revendication 1 à 6 **caractérisé en ce que** l'organe de pincement (2) comprend en outre un moyen d'entraînement (14) pour déplacer linéairement l'élément de pincement (13).

8. Dispositif pour souder selon l'une quelconque des revendication 7 **caractérisé en ce que** moyen d'entrainement (14) est couplé à un élément élastique (15).

9. Dispositif pour souder selon l'une quelconque des revendication 1 à 8 **caractérisé en ce que** la source d'énergie (5) est une batterie intégrée de façon amovible dans le dispositif pour souder.

10. Dispositif pour souder selon l'une quelconque des revendication 1 à 9 caractérisé en ce la première électrode (3) est mobile en rotation par rapport à une tige (16) de l'organe de pincement (2), ladite tige (16) étant est placée parallèlement à l'axe du tube souple à souder.

11. Dispositif pour souder selon l'une quelconque des revendication 1 à 10 **caractérisé en ce qu'**il comprend un actionneur (31) pour actionner le dispositif pour souder, ledit actionneur comprenant un ensemble bouton formé d'une pièce de bouton (32) et de deux boutons poussoirs (33,34) actionnables par l'intermédiaire d'une lame (35) agencée entre les boutons poussoirs (33,34) et la pièce de bouton (32).

12. Appareil comprenant un dispositif pour souder selon l'une quelconque des revendications 1 à 11.
